**Europäisches Patentamt**

**European Patent Office**

**Office européen des brevets**

(19)

(11) Publication number: **0 183 425**

**A2**

(12) # EUROPEAN PATENT APPLICATION

(21) Application number: **85308210.5**

(22) Date of filing: **12.11.85**

(51) Int. Cl.⁴: **B 65 D 83/14**

(30) Priority: **26.11.84 GB 8429770**

(43) Date of publication of application:
**04.06.86 Bulletin 86/23**

(84) Designated Contracting States:
**AT BE CH DE FR GB IT LI LU NL SE**

(71) Applicant: **IMPERIAL CHEMICAL INDUSTRIES PLC**
**Imperial Chemical House Millbank**
**London SW1P 3JF(GB)**

(72) Inventor: **Connolly, Anthony**
**7 Chelston Close Naisberry Park**
**Hartlepool Cleveland(GB)**

(72) Inventor: **Baxter, William Ronald Stuart**
**2 Mackenzie Road**
**Cambridge, CB1 1DW(GB)**

(74) Representative: **Denerley, Paul Millington, Dr. et al,**
**Imperial Chemical Industries PLC Legal Department:**
**Patents P.O. Box 6, Bessemer Road**
**Welwyn Garden City Hertfordshire AL7 1HD(GB)**

(54) **Flow regulator.**

(57) A container e.g. an aerosol container is provided with a fluid flow regulator. The regulator forms a flow path from one region to another. In the flow path is a chamber one part of which is deformable. Fluid passes from the container through an inlet to the chamber and from thence through an outlet. A pressure differential is created between the container and the chamber. The fluid in the container exerts pressure on the deformable part which deforms to increasingly restrict the flow of fluid through the outlet.

*Fig.2.*

Croydon Printing Company Ltd

## Flow regulator

The present invention relates to flow regulators for fluids and in particular to such regulators for controlling the flow of fluid from a container.

It is a problem associated with many containers that, as pressure inside the container varies, the flow rate of liquid issuing from that container varies. Thus a regular uniform flow rate is not achieved. Clearly non-uniformity of flow rate is disadvantageous in many applications.

EP-A-133770 (application no. 84305017) describes a device, for regulating the flow of fluid from a container, that comprises a resilient tube optionally in conjunction with a mandrel, subject to the pressure inside the container. In a preferred form a fixed flow restrictor was provided upstream of the resilient tube. In use fluid would flow from the container through the restrictor and subsequently through the resilient tube to an outlet. The fluid in the container presses against the outside of the resilient tube and forces it against the mandrel to restrict the flow within that tube. Thus as the pressure difference between the fluid in the container and the fluid in the tube decreases the tube provides a wider pathway and the flow increases. Thus overall flow rate is rendered more uniform. The device of EP-A-133770 is of particular utility in aerosol-type applications. The present invention provides a related device.

Accordingly the present invention provides a fluid flow regulator, forming a flow path for a fluid from a first region to a second region, which comprises:

(i)     a body member,

(ii)    a resiliently deformable sheet member which together with the body member defines a chamber,

(iii)   an inlet from the first region to the chamber,

(iv)    an outlet, formed in the body member, from the chamber to the second region, the outlet so positioned in relation to the resiliently deformable member that as the pressure difference between the first region and the chamber increases, increasing deformation of the deformable member occurs and increasingly restricts the flow path of fluid from the chamber through the outlet, wherein the inlet has at least one passage, each said passage or passages including a portion of cross-sectional area below 0.5 $mm^2$, the length of such portions in each passage being less than 2 mm, and the minimum cross-sectional area of each passage being such that the total minimum cross-sectional area of the inlet is less than 0.5 $mm^2$.

In a preferred aspect the resiliency and disposition of the deformable member in relation to the outlet, and the number and dimensions of said inlet passage or passages is such that, when used to regulate the flow of water at $20^{o}C$ at pressure differences between said first and second regions of at least up to 1 bar, the deformation of said resiliently deformable member caused by the pressure difference between said first region and said chamber created by the flow of the water through said inlet passage or passages restricts the water flow through the outlet to below 2.5 $ml.s^{-1}$.

The flow regulator is preferably of sufficiently robust construction that it can withstand pressure differences between the first and second regions of at least 4 bar, particularly at least 8 bar. In such cases it is preferred that the deformable member resiliency and disposition, and the number and dimensions of the inlet passages are such that, when used to regulate the flow of water at $20^{o}C$, the flow rate is below 2.5 $ml.s^{-1}$ at pressure differences between the first and second regions of up to at least 4 bar, particularly at least 8 bar.

It is preferred that, with water at 20°C, the flow rate at a pressure difference across said flow regulator of 8 bar does not differ from that at a pressure difference of 4 bar by more than 30%.

The flow regulator is intended for use at low flow rates, such as are encountered in aerosol applications where the flow rate is generally below 2 ml.s$^{-1}$ and preferably below 1 ml.s$^{-1}$. For some applications, e.g. pesticide formulation or perfume dispensing the rates may be as low as 0.002 ml.s$^{-1}$.

Suitably the outlet comprises a plurality of outlet passages, positioned so that the flow of fluid through each passage can be restricted by the deformation of the resiliently deformable member. More conveniently there is one outlet passage.

In the flow regulator of the invention, deformation of the deformable member restricts the flow of fluid through the outlet passage or passages: if the flow rate increases significantly, a larger pressure difference would occur across the inlet passage or passages giving rise to a greater deformation of the deformable member until the amount of deformation is such as to completely close the flow path. The pressure difference across the inlet passage or passages will then drop to zero, if there is no flow, thus removing the deforming force, thus opening the outlet passage or passages. The system will thus effect regulation of the flow at a substantially constant level provided the pressure difference across the regulator between the first region, ie. that side of the deformable member remote from the chamber and the second region with which the outlet passage or passages communicate, is above a certain level determined by the resilience of the deformable member, its disposition in relation to the outlet passage or passages, and the inlet passage dimensions.

In the present invention these parameters are interrelated such that, when used to regulate the flow of water at 20°C, at pressure differences across said flow regulator of at least up to 1, preferably at least up to 4, and particularly at least up to 8, bar the deformation of the deformable member caused by the pressure difference created by the flow of the water through the inlet passage or passages restricts the water flow through the outlet passage or passages to below 2.5 $ml.s^{-1}$.

It will be appreciated that, in practice, the flow regulator need not be used to regulate water flow. Any fluid, particularly liquid, may be employed and the design flow rate with any given liquid need not be below 2.5 $ml.s^{-1}$. It is preferred that, at 20°C, the fluid has a viscosity of below $10^{-1}$ Pa.s.

In the present invention the resiliently deformable member is in the form of a sheet that with the body member defines a chamber. By the term sheet is meant all configurations that fulfil the required function, for example sheet, foil, leaf and plate. Suitably the resiliently deformable member is made of a plastics material. Conveniently the deformable member is fastened to the body member. Deformation of the sheet is caused by a pressure difference between opposed sides thereof and so the sheet acts as a diaphragm. This pressure difference results from the passage of fluid through one or more inlet passages into the chamber formed by the deformable member and the body member.

The or each inlet passage may be a hole through the wall of the body member or, preferably, a hole through the deformable member. Each hole has a portion, hereinafter termed an orifice, of small cross-sectional area, below 0.5 $mm^2$. By making the length of the, or each, orifice short, less than 2 mm, the pressure difference resulting from viscous flow can be reduced: consequently the pressure difference results to a substantial extent from the change in kinetic energy of the fluid as it passes through the orifice or orifices. Assuming the velocity of the fluid on either side of the orifice or orifices is small in relation to the velocity of the fluid passing through the orifice or orifices, the kinetic energy change depends on the square of the velocity of the fluid passing through the orifice or orifices.

The velocity of a fluid passing through an orifice depends on the cross-sectional area of the orifice and the volumetric flow rate. Hence for any given volumetric flow rate and orifice size, there will be a given kinetic energy change which results in a given pressure difference across the orifice. The pressure difference resulting from kinetic energy change, unlike that resulting from viscous flow, is largely independent of temperature although it does vary as the density of the fluid changes with temperature.

For any given volumetric flow rate, the pressure difference will thus increase as the orifice cross-sectional area decreases.

For reasons of ease of manufacture, the orifice, or orifices, are preferably circular in cross-section. So that they are not readily blocked by particulate matter, e.g. foreign bodies, in the fluid, each orifice preferably has a minimum cross-sectional dimension, i.e. diameter in the case of a circular orifice, of at least 40 $\mu$m, and preferably at least twice the maximum dimension of any particulate matter in the fluid.

Each orifice preferably has a maximum cross-sectional dimension below 400 $\mu$m.

To achieve an adequate kinetic energy change, the total cross-sectional area of the orifice or orifices is below 0.5 $mm^2$ and preferably such that, at the design volumetric flow rate, the linear velocity of the fluid through the orifice or orifices is in the range 5 to 12 m.s.$^{-1}$.

The pressure difference between opposed sides of the deformable sheet created by the flow of fluid through the orifice or orifices, i.e. as a result of kinetic energy changes and viscous flow effects, causes the sheet to deform to restrict the flow path for the fluid from the chamber through the outlet passage or passages thereof. The amount of deformation given by any particular pressure difference will depend on the configuration of the deformable member, its dimensions and material of construction. The deformable member is conveniently a disc, or moulding having a disc-like central portion, fastened round the disc periphery to the open end of a body member having a shallow hollow cylindrical configuration. The body member preferably has its outlet passage or passages at or near the centre of its closed end. The amount of restriction to fluid flow given by the deformation of the sheet will depend on the spacing of the sheet from the outlet or outlets: with the sheet or foil undeformed, the spacing between the sheet and the interior surface of the body member proximate the outlet is suitably between 0.2 and 3 mm, preferably between 0.3 and 1.0 mm, for example about 0.5 mm.

In one aspect of this invention this spacing may be varied. Suitably the disc forms part of a cap and between the cap and the body member is formed the chamber for passage of fluid, the outlet passage or passages being in the body member. The cap and body member, in particular the deformable part of the cap and that part of the body member proximate the outlet passage or passages, are movable relative to each other in any convenient manner, for example by push or frictional fit or by screw adjustment. In this way the spacing between the deformable member and the outlet passage or passages is variable according to the requirements of the user. The spacing may be variable in response to actuation from a temperature sensing device. Thus changes in temperature, if they affect the flow rate of a particular liquid in a particular device, may be automatically compensated for by varying the space. Therefore the flow rate is rendered more uniform.

In the form of construction wherein the deformable member comprises a disc, the latter preferably has a region of reduced thickness round its periphery, inboard of its fastening to the non-deformable member. This enables the deformable member to act in a manner akin to a supported beam rather than as a clamped beam, thereby increasing the amount of deformation produced by a given pressure difference.

The deformable member preferably comprises a disc of diameter 10 to 30 mm having a thickness of 0.01 to 1 mm, preferably 0.05 to 0.5 mm.

The inlet passage or passages are positioned at a location remote from the outlet passage or passages. Where the inlet passage or passages are holes through the deformable member and the latter is of a disc configuration, preferably the inlet passage or passages are near to the edge of the disc: where the latter has a region of reduced thickness the inlet passage or passages may be positioned at this region of reduced thickness in order to minimise the contribution to the pressure difference resulting from viscous flow effects.

It will be appreciated that for any given design flow rate there need only be a single inlet passage: if a larger flow rate is required, a larger orifice can be employed. However so that a single flow regulator configuration and a single orifice size can be used for a variety of design flow rates, it may be desirable that several inlet passages are povided when the regulator is intended for use at increased design flow rates.

The deformable member may be a plastics moulding: in an alternative it may be a metal foil.

The inlet passage or passages may be made by any suitable technique such as mechanical or laser drilling, pinhole etching or stamping. In some cases where the deformable member is a plastics moulding the inlet pssage or passages may be formed therein as part of the moulding operation.

The flow regulator is preferably adapted to be fastened to the outlet of a vessel, e.g. an aerosol canister, to regulate the flow of fluid therefrom: in this form of construction, the regulator is disposed so that the deformable member is subject to the pressure inside the vessel. Where the vessel has a dip-tube to enable liquid to be dispensed from the top of the vessel by the action of pressure, e.g. from a gas in the space above the liquid, the flow regulator should be mounted at the lower end of the dip-tube. Alternatively the regulator may be mounted inside the vessel at the outlet thereof with the dip-tube fastened to the inlet passage to the chamber.

Downstream of the regulator an on/off valve, e.g. an aerosol valve, may be provided if desired.

Thus in another aspect of the present invention there is provided apparatus for dispensing a fluid which apparatus comprises a container having an exit and a flow regulator within said container defining the flow path for said fluid from the body of said container to the exit wherein the flow regulator comprises a body member, a resiliently deformable sheet member which together with the body member defines a chamber, an inlet from the body of the container to the chamber, an outlet, formed in the body member, from the chamber to said container exit, the outlet so positioned that in relation to the resiliently deformable member that as the pressure difference between the body of the container and the chamber increases, increasing deformation of the deformable member occurs and increasingly restricts the flow path of fluid from the chamber through the outlet, wherein the inlet has at least one passage, each said passage or passages including a portion of cross-sectional area below 0.5 $mm^2$, the length of such portions in each passage being less than 2 mm, and the minimum cross-sectional area of each passage being such that the total minimum cross-sectional area of the inlet is less than 0.5 $mm^2$.

In a preferred aspect the container is an aerosol canister, preferably of barrier pack construction.

One embodiment of the invention is illustrated by reference to the accompanying drawings wherein

Figure 1 is an elevation of a flow regulator fitted to a container, with part of the latter cut away and shown in section.

Figure 2 is an enlarged cross-section of the flow regulator of Figure 1, and

Figure 3 is a plan view of the diaphragm moulding shown in Figure 2, viewed from the underside.

The flow regulator comprises a body member 1 moulded from a plastics material and a second plastics moulding cap 2, hereinafter termed a diaphragm moulding, which is a push-fit on to the end of body member 1. The two mouldings 1, 2 enclose a chamber 3. Body member 1 has a raised central region 4 from which an outlet bore 5 extends through body member 1.

Body member 1 is fastened to the exit of a container 6 by a nut 7 with an O-ring seal 8 between the body member 1 and the interior surface of container 6.

Diaphragm moulding 2 has a rigid exterior flange 9, for engagement with body member 1, surrounding a disc-like diaphragm 10. Round the periphery 11 of the diaphragm 10, the moulding is of reduced thickness so that the diaphragm acts as a supported, rather than clamped, plate.

Near to the region of reduced thickness, a small diameter hole 12, forming the inlet to chamber 3, is bored through the diaphragm 10.

On creation of a pressure difference between the interior 13 of container 6 and chamber 3 by fluid flowing from the interior 13 of container 6 through hole 12, the diaphragm 10 flexes towards the raised central portion 4 of body member 1 thus restricting the flow path for fluid from chamber 3 out through bore 5.

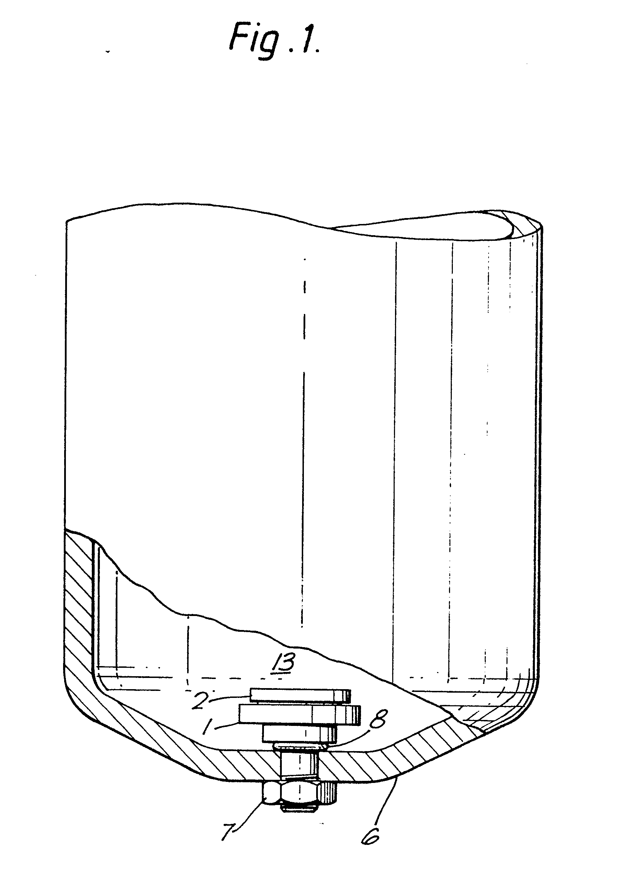

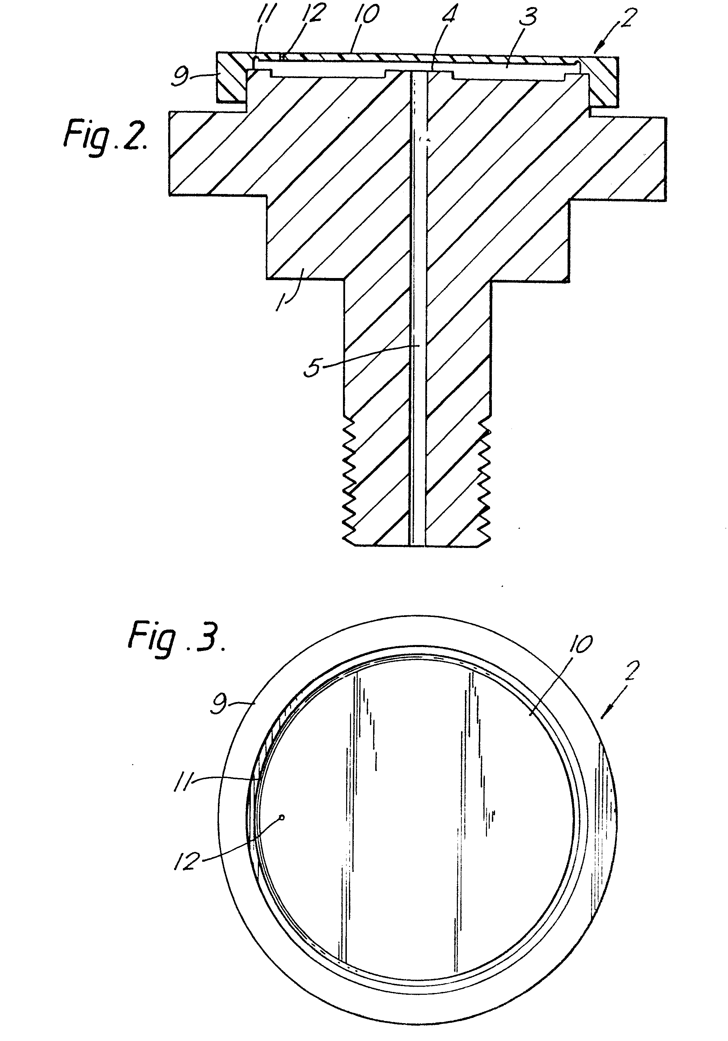

The invention is further illustrated by the following Example in which apparatus of the type shown in Figures 1 to 3 was employed.

Diaphragm moulding 2 had an overall diameter of 24.5 mm while the diaphragm 10, i.e. the portion within the line 11 of reduced thickness, had a diameter of 20 mm. The thickness of diaphragm 10 was 0.37 mm while, at the line 11 of reduced thickness, the thickness was 0.20 mm.

The spacing between the chamber 3 side of diaphragm 10 (with the diaphragm unflexed) and the raised central region 4 (which had a diameter of 4.2 mm) was 0.45 mm. The outlet bore 5 had a diameter of 1 mm.

The diaphragm mounding 2 was made from an oxymethylene polymer.

Several diaphragm mouldings 2 were made with holes 12 of different diameters drilled mechanically or by laser at a position 8.25 mm from the centre of diaphragm 10. Microscopic examination of the holes showed that in some cases because of the techniques used to make the holes, the holes did not have a truly circular cross-section: the diameters quoted hereinafter are thus a mean diameter.

The flow regulator was mounted as shown in Figure 1 to the inside of a container that could be pressurised. The container was charged with a liquid and the pressure applied thereto increased in stages. The volumetric flow rate at various gauge pressures was measured. This was repeated
using diaphragm mouldings having holes of differing sizes.
In each case the diaphragm had only one hole. In one set of
experiments the liquid was water while in another set the
liquid was a solution of specific gravity 0.89 of a pesticide
in an organic solvent and having a viscosity of 3.5 Pa.s.
All experiments were performed at 20°C.

The results were as follows:

| Liquid | Hole diameter (μm) | Volumetric flow rate ($\mu l.s^{-1}$) at a gauge Pressure of P (bar) | | | | |
|---|---|---|---|---|---|---|
| | | P = 1.4 | P = 2.1 | P = 4.1 | P = 6.2 | P = 8.3 |
| water | 44 | 6.2 | 6.5 | 6.0 | 5.7 | 6.8 |
| | 57* | 19 | 17 | 17 | 16 | 16 |
| | 67* | 21 | 20 | 18 | 17 | 16 |
| | 75* | 30 | 29 | 27 | 26 | 25 |
| | 84* | 33 | 31 | 30 | 29 | 28 |
| | 110 | 33 | 32 | 28 | 30 | 32 |
| | 160 | 65 | 57 | 55 | 53 | 52 |
| | 195 | 200 | 200 | 180 | 180 | 170 |
| | 290 | 500 | 500 | 500 | 500 | 470 |
| pesticide formulation | 57* | 17 | 16 | 14 | 14 | 14 |
| | 67* | 21 | 22 | 20 | 19 | 19 |
| | 75* | – | 21 | 20 | 19 | 18 |
| | 84* | 26 | 26 | 24 | 24 | 24 |
| | 115 | 36 | 36 | 32 | 28 | 26 |
| | 160 | 75 | 69 | 62 | 60 | 58 |
| | 195 | 160 | 170 | 160 | 160 | 150 |
| | 290 | 450 | 560 | 600 | 600 | 560 |

* laser drilled holes.

1.        A fluid flow regulator, forming a flow path for a fluid from a first region to a second region, which comprises:

(i)        a body member,

(ii)       a resiliently deformable sheet member which together with the body member defines a chamber,

(iii)      an inlet from the first region to the chamber,

(iv)      an outlet, formed in the body member, from the chamber to the second region, the outlet so positioned in relation to the resiliently deformable member that as the pressure difference between the first region and the chamber increases, increasing deformation of the deformable member occurs and increasingly restricts the flow path of fluid from the chamber through the outlet,

wherein the inlet has at least one passage, each said passage or passages including a portion of cross-sectional area below 0.5 $mm^2$, the length of such portions in each passage being less than 2 mm, and the minimum cross-sectional area of each passage being such that the total minimum cross-sectional area of the inlet is less than 0.5 $mm^2$.

2.        A regulator according to claim 1 wherein the resiliency and disposition of the deformable member in relation to the outlet and the number and dimensions of the inlet passage or passages is such that, when used to regulate the flow of water at $20^{o}C$ at pressure differences between the first and regions of at least up to 1 bar, the deformation of the resiliently deformable member caused by the pressure difference between the first region and the chamber created by the flow of water through the inlet passage or passages restricts the water flow through the outlet to below 2.5 ml. $s^{-1}$.

3.        A regulator according to either claim 1 or 2 wherein the inlet is a passage through the deformable member.

4.      A regulator according to any one of claims 1 to 3 wherein the resiliently deformable member is a sheet of plastics material.

5.      A regulator according to any one of claims 1 to 4 wherein the resiliently deformable member is a disc fastened around the periphery thereof to the open end of a body member having a shallow hollow cylindrical configuration, the body member having an outlet at or near the centre of its closed end.

6.      A regulator according to claim 5 wherein the disc has a region of reduced thickness around the periphery thereof, inboard of the fastening to the open end of the hollow cylindrical body member.

7.      A regulator according to claim 6 wherein the inlet from the first region to the chamber comprises an inlet passage in the region of reduced thickness.

8.      A regulator according to any one of claims 5 to 7 wherein the disc has a diameter of 10 - 30 mm and a thickness of 0.05 to 0.5 mm.

9.      A regulator according to any one of claims 5 to 8 wherein the spacing between the undeformed resilient member and the interior surface of the body member proximate the outlet is between 0.2 and 3 mm.

10.     A regulator according to any one of claims 1 to 9 wherein the spacing between the undeformed resilient member and the outlet is variable in a controlled manner so to change the dimensions of the flow path of the fluid and alter the characteristics of the regulator in a pre-determined way.

11.     Apparatus for dispensing a fluid which apparatus comprises a container having an exit and a flow regulator within said container defining the flow path for said fluid from the body of said container to the exit wherein the flow
regulator comprises a body member, a resiliently deformable
sheet member which together with the body member defines a
chamber, an inlet from the body of the container to the
chamber, an outlet, formed in the body member, from the
chamber to said container exit, the outlet so positioned that
in relation to the resiliently deformable member that as the
pressure difference between the body of the container and the
chamber increases, increasing deformation of the deformable
member occurs and increasingly restricts the flow path of
fluid from the chamber through the outlet, wherein the inlet
has at least one passage, each said passage or passages
including a portion of cross-sectional area below $0.5 \text{ mm}^2$,
the length of such portions in each passage being less than 2
mm, and the minimum cross-sectional area of each passage
being such that the total minimum cross-sectional area of the
inlet is less than $0.5 \text{ mm}^2$.

12.    Apparatus accordingly to claim 11 wherein the
container is an aerosol canister.

13.    Apparatus according to claim 11 wherein the aerosol
canister is of the barrier pack configuration.

14.    Apparatus according to any one of claims 11 to 13
wherein the container contains fluid under pressure.

15.    Apparatus according to claim 14 wherein the fluid
to be dispensed is a liquid pressurised by a compressed gas.

PA/PMD/MP

1 November 1985/L115

# Fig .1.

0183425

**Fig.2.**

**Fig.3.**